# EUROPÄISCHE PATENTANMELDUNG

(11) **EP 2 113 383 A2**
(43) Veröffentlichungstag der Anmeldung: **04.11.2009**
(21) Anmeldenummer: 09005454.5
(22) Anmeldetag: 17.04.2009
(51) Int. Cl.: B41F 13/58, B26D 1/14, B26D 1/01

(54) **Längsschneideinrichtung für eine Bogendruckmaschine**

(30) Priorität: 30.04.2008 DE 102008001500
(71) Anmelder: manroland AG, 63075 Offenbach (DE)
(72) Erfinder: Bräutigam, Thomas, 63868 Grosswallstadt (DE); Subtil, Harald, 63110 Rodgau (DE)
(74) Vertreter: Stahl, Dietmar

(57) **Zusammenfassung**

Schneideinrichtung (1,1') für eine Bogendruckmaschine, mit Schneidmitteln (10,40) zum Schneiden von Druckbogen und einer Andruckscheibe (20), die drehbar an einer Achse (21) gelagert ist und die den Schneidmitteln gegenüberliegt, so dass die zu schneidenden Druckbogen zwischen den Schneidmitteln und einer rotierenden Umfangsfläche (20a) der Andruckscheibe hindurchzuführen sind, wobei die Schneidmittel zum Schneiden der Druckbogen selektiv mit der Umfangsfläche der Andruckscheibe in Zusammenwirkung bringbar sind.

## Beschreibung

Die Erfindung betrifft eine Schneideinrichtung für eine Bogendruckmaschine, und insbesondere eine Schneideinrichtung mit verbesserten Betriebs- und Wartungseigenschaften.

Schneideinrichtungen werden in Bogendruckmaschinen z.B. zum Längsschneiden der bedruckten Druckbogen eingesetzt.

Übliche Schneideinrichtungen weisen beispielsweise einen Schneidkopf auf, der mit einem auf die Mantelfläche eines Druckwerkszylinders aufgeklebten Stahlband zum Längsschneiden der Druckbogen zusammenwirkt.

Nachteilig an dieser Lösung ist, dass bei Verrutschen des Stahlbandes der Druckwerkszylinder durch den Schneidkopf beschädigt werden kann und dass nach einem Druck ohne Längsschnitt der Druckbogen, bei dem das Stahlband zu entfernen ist, das Stahlband erneut auf den Druckwerkszylinder aufgeklebt werden muss, wenn wieder längs geschnitten werden soll. Dies führt einerseits zu hohen Reparaturkosten und andererseits zu langen Umrüstzeiten.

Aus DE 10 2006 059 016 A1 ist beispielsweise eine Schneideinrichtung für eine Bogendruckmaschine bekannt, wobei die Schneideinrichtung im Transportpfad eines Kettenförderers eines Auslegers der Bogendruckmaschine angeordnet ist. Gemäß diesem Dokument ist unterhalb des Transportpfades ein Schneidstrahler vorgesehen, welcher mit einem über dem Transportpfad und mit Abstand vom Schneidstrahler angeordneten Auffang für den Schneidstrahl zusammenwirkt. Die bedruckten Druckbogen werden zum Längsschneiden mittels des Kettenförderers durch einen Schneidstrahl des Schneidstrahlers hindurchgeführt, wobei die Druckbogen mittels einer Bogenstütze über dem Schneidstrahler abgestützt werden.

Nachteilig an dieser Lösung ist, dass die Druckbogen zwar über dem Schneidstrahler abgestützt sind, so dass sie diesen nicht berühren können, aber beispielsweise durch Flattern eine undefinierte Höhenposition über dem Schneidstrahler einnehmen können.

Dies wirkt sich insbesondere dann negativ aus, wenn die Druckbogen mittels eines Laserstrahls geschnitten werden sollen, da hierbei die Druckbogen in einem definierten Abstand über den Lichtaustritt zu führen sind, so dass sich der Fokus des Laserstrahls innerhalb des jeweiligen Druckbogens bzw. Bedruckstoffs befindet.

Der Erfindung liegt die Aufgabe zugrunde, eine Schneideinrichtung, insbesondere eine Längsschneideinrichtung, für eine Bogendruckmaschine bereitzustellen, welche verbesserte Betriebs- und Wartungseigenschaften aufweist.

Dies wird mit einer Schneideinrichtung gemäß Anspruch 1 erreicht. Weiterbildungen der Erfindung sind in den abhängigen Ansprüchen definiert.

Gemäß der Erfindung weist eine Schneideinrichtung für eine Bogendruckmaschine Schneidmittel zum Schneiden von Druckbogen und eine Andruckscheibe auf, die drehbar an einer Achse gelagert ist und die den Schneidmitteln gegenüberliegt, so dass die zu schneidenden Druckbogen zwischen den Schneidmitteln und einer rotierenden Umfangsfläche der Andruckscheibe hindurchzuführen sind, wobei die Schneidmittel zum Schneiden der Druckbogen selektiv mit der Umfangsfläche der Andruckscheibe in Zusammenwirkung bringbar sind.

D.h., gemäß der Erfindung ist die mit den Schneidmitteln zusammenwirkende Andruckscheibe separat von Druckwerkszylindern der Bogendruckmaschine ausgebildet, so dass die Druckwerkszylinder beim Schneiden nicht beschädigt werden können. Dadurch können Reparaturkosten und Stillstandszeiten eingespart werden.

Dadurch, dass die Schneidmittel zum Schneiden der Druckbogen selektiv mit der Umfangsfläche der Andruckscheibe in Zusammenwirkung bringbar sind, also die Schneideinrichtung auch deaktivierbar ist, wenn kein Schneiden der Druckbogen erfolgen soll, bietet die erfindungsgemäße Schneideinrichtung ein große Flexibilität hinsichtlich der Herstellung unterschiedlicher Druckprodukte. Lange Umrüstzeiten, und damit Stillstandszeiten, können erfindungsgemäß vermieden werden, wodurch die Produktivität der Bogendruckmaschine erhöht werden kann.

Gemäß einer Ausführungsform der Erfindung ist die Schneideinrichtung in einer Druckbogenlaufrichtung in der Bogendruckmaschine nach einem letzten Druckwerk oder nach einem letzten Lackwerk angeordnet.

Durch diese Anordnung ist es u.a. möglich, durch die Schneideinrichtung beim Schneiden erzeugte Partikel bzw. Gase von den Druckwerken der Bogendruckmaschine fern zu halten.

Gemäß einer Ausführungsform der Erfindung weisen die Schneidmittel eine Lasereinheit, die so angeordnet ist, dass ein von der Lasereinheit emittierter Laserstrahl auf die Umfangsfläche der Andruckscheibe gerichtet ist, und wenigstens eine Gegenrolle auf, die drehbar an einer parallel zur Achse der Andruckscheibe verlaufenden Achse gelagert ist. So erfolgt das Anlegen der tangential an der Gegenrolle vorbeizuführenden Druckbogen an die Umfangsfläche der Andruckscheibe.

Die Gegenrollen können durch einen oder mehrere Leitelemente in Form eines Gleitschuhes ersetzt werden. Dieser wird an der Position der Gegenrollen eingesetzt und kann ebenfalls die Führung der Druckbogen an der Umfangsfläche der Andruckscheibe übernehmen, wobei der Druckbogen hier durch die Gleitreibung des Gleitschuhes mehr gestrafft wird. Die im Folgenden aufgeführten Ausführungsmöglichkeiten in Verwendung von Gegenrollen beziehen sich daher jeweils auch auf die Variante des Gleitschuhes.

Mit dieser Ausgestaltung der Erfindung ist ein effizientes und genaues Laserschneiden der Druckbogen möglich, da sich die Druckbogen von der Gegenrolle an die Andruckscheibe gedrückt im Schnittbereich stets in einem definierten Abstand zu einem Austritt des Laserstrahls aus der Lasereinheit befinden, so dass sich der Fokus des Laserstrahls im jeweiligen Druckbogen bzw. Bedruckstoff befindet.

Gemäß einer Ausführungsform der Erfindung ist auf der Umfangsfläche der Andruckscheibe in einem bei einem Umlaufen der Andruckscheibe gebildeten, ringförmigen Wirkbereich des Laserstrahls ein widerstandsfähiges, verschleißfestes Material vorgesehen, das je nach Verfahrensweise als Wärme leitend oder als nicht Wärme leitend ausgebildet sein kann und welches beim Schneiden eines an die Umfangsfläche angelegten Druckbogens den übermäßigen Eintrag von durch den Laserstrahl erzeugter Wärme in die Andruckscheibe verhindert oder zur Wärmeableitung geeignet ist.

Durch diese Anordnung kann einerseits auf eine sonst notwendige als Strahlenfalle bezeichnete Vorrichtung zur Aufnahme des austretenden Laserstrahls und zur Wärmeableitung aus der Wirkung des Laserstrahls verzichtet werden. Andererseits bietet die Anordnung auch die vereinfachte Möglichkeit eine derartige Strahlenfalle einzubinden.

Gemäß einer Ausführungsform der Erfindung ist das widerstandsfähige, verschleißfeste Material in einer Vertiefung in der Umfangsfläche der Andruckscheibe angeordnet.

Auf diese Weise kann die Andruckscheibe aus einem stabilen Material wie z.B. Stahl hergestellt sein, welches den mechanischen Anforderungen genügt. Ferner kann das widerstandsfähige, verschleißfeste Material bei Bedarf erneuert werden.

Gemäß einer Ausführungsform der Erfindung ist auf der Umfangsfläche der Andruckscheibe zu beiden Seiten des in dem ringförmigen Wirkbereich vorgesehenen, widerstandsfähigen, verschleißfesten Materials ringförmig jeweils ein elastisches Material vorgesehen.

Dadurch können Beschädigungen der Druckbogenoberfläche neben der eigentlichen Schnittlinie weitestgehend vermieden werden.

Gemäß einer Ausführungsform der Erfindung ist benachbart zu der Andruckscheibe und der wenigstens einen Gegenrolle eine Absaugvorrichtung angeordnet zum Absaugen von beim Laserstrahlschneiden entstehenden Partikeln und Gasen.

Damit können zuverlässig Verschmutzungen und Geruchsbelästigungen durch beim Laserstrahlschneiden entstehende Partikel und Gase vermieden bzw. reduziert werden.

Gemäß einer Ausführungsform der Erfindung weist die wenigstens eine Gegenrolle in Richtung ihrer Achse gesehen eine vorbestimmte Breite auf, wobei die Gegenrolle entlang ihrer Breite sanduhrförmig profiliert ist.

Damit wird in dem Mittenbereich der Gegenrolle, welcher am "dünnsten" ausgebildet ist, Raum zum Ansetzen des Laserstrahls bereitgestellt, wobei der Druckbogen durch die beiden "dickeren" Enden der Gegenrolle trotzdem zuverlässig an die Andruckscheibe gedrückt wird.

Gemäß einer Ausführungsform der Erfindung sind zwei Gegenrollen vorgesehen, die mit vorbestimmtem Zwischenraum zwischen einander entlang des Umfangs der Andruckscheibe angeordnet sind, wobei die Lasereinheit so angeordnet ist, dass von dieser emittierte Laserstrahlen sich durch den Zwischenraum hindurch erstrecken.

Dadurch, dass zwei sanduhrförmig profilierte Gegenrollen vorgesehen sind, werden einerseits die Druckbogen im Schnittbereich noch besser an die Andruckscheibe angelegt und wird andererseits ausreichend Raum in Form einer ungefähr kreisförmigen Durchtrittsöffnung bereitgestellt, um den eigentlichen Schnittbereich bzw. Schnittpunkt freiliegen zu lassen.

Gemäß einer Ausführungsform der Erfindung ist jede Gegenrolle zur Aktivierung an die Umfangsfläche der Andruckscheibe anstellbar und zur Deaktivierung von der Umfangsfläche der Andruckscheibe abstellbar.

Damit können die Gegenrollen gemeinsam oder einzeln je nach Bedarf zum Einsatz gebracht werden oder, wenn nicht benötigt, aus dem Transportweg der Druckbogen z.B. herausgeschwenkt oder linear herausgefahren werden.

Gemäß einer Ausführungsform der Erfindung ist die Absaugvorrichtung so angeordnet, dass sich deren Absaugwirkung auf den Zwischenraum der Gegenrollen konzentriert.

Diese Ausgestaltung macht die Absaugvorrichtung besonders effektiv, da beim Laserstrahlschneiden entstehende Partikel oder Gase, wie z.B. Schmauch, sehr nahe an ihrer Entstehungsstelle abgesaugt werden können.

Gemäß einer Ausführungsform der Erfindung weisen die Schneidmittel ein Schneidrad auf, das drehbar an einer parallel zur Achse der Andruckscheibe verlaufenden Achse gelagert ist und das zum Schneiden an die Umfangsfläche der Andruckscheibe anstellbar und zum Schneidfreistellen von der Umfangsfläche der Andruckscheibe abstellbar ist.

Mit anderen Worten arbeitet das Schneidrad beim Schneiden der Druckbogen ähnlich einem "Pizzaschneidrad" gegen die Umfangsfläche der Andruckscheibe, wodurch eine äußerst einfache und dennoch effiziente Schneideinrichtung geschaffen ist.

Durch die An- und Abstellbarkeit des Schneidrades kann je nach Bedarf und ohne relevante Rüstzeit, z.B. auch fliegend im Betrieb, der Druckprozess von Längsschneiden auf nicht Längsschneiden und umgekehrt umgestellt werden. Dies bietet eine hohe Flexibilität und trägt erheblich zu einer Produktivitätserhöhung bei.

Gemäß einer Ausführungsform der Erfindung weisen die Schneidmittel ein drehfestes Schneidmesser auf, das zum Schneiden an die Umfangsfläche der Andruckscheibe anstellbar und zum Schneidfreistellen von der Umfangsfläche der Andruckscheibe abstellbar ist.

Diese Ausführungsform stellt eine besonders einfache und damit besonders kostengünstige Ausgestaltung der Erfindung dar.

Gemäß einer Ausführungsform der Erfindung ist die Andruckscheibe an ihrer Umfangsfläche in einem bei einem Umlaufen der Andruckscheibe gebildeten, ringförmigen Wirkbereich der Schneidmittel mit einem Polyamidmaterial versehen ist.

Durch Vorsehen dieses relativ weichen Materials kann das sehr harte Material des Schneidrades bzw. des drehfesten Schneidmessers beschädigungsfrei auf die Umfangsfläche der Andruckscheibe aufgesetzt werden, so dass eine lange Standzeit des Schneidrades bzw. des drehfesten Schneidmessers gewährleistet ist.

Gemäß einer Ausführungsform der Erfindung weist die Andruckscheibe mehrere kreissektorförmige Segmente auf, die gemeinsam den Umfang der Andruckscheibe definieren.

Mit anderen Worten sind die einzelnen Segmente die Andruckscheibe bildend separat an die ihnen gemeinsame Achse der Andruckscheibe montiert, wodurch die Andruckscheibe leicht montiert und demontiert werden kann (z.B. zum Warten oder bei Nichtbenötigung).

Die Erfindung wird nun unter Bezugnahme auf die beigefügten Figuren anhand von Ausführungsformen beschrieben.
- Figur 1: zeigt eine schematische, seitliche Ansicht einer ersten Ausführungsform der erfindungsgemäßen Schneideinrichtung.
- Figur 2: zeigt eine schematische, seitliche Ansicht einer zweiten Ausführungsform der erfindungsgemäßen Schneideinrichtung.

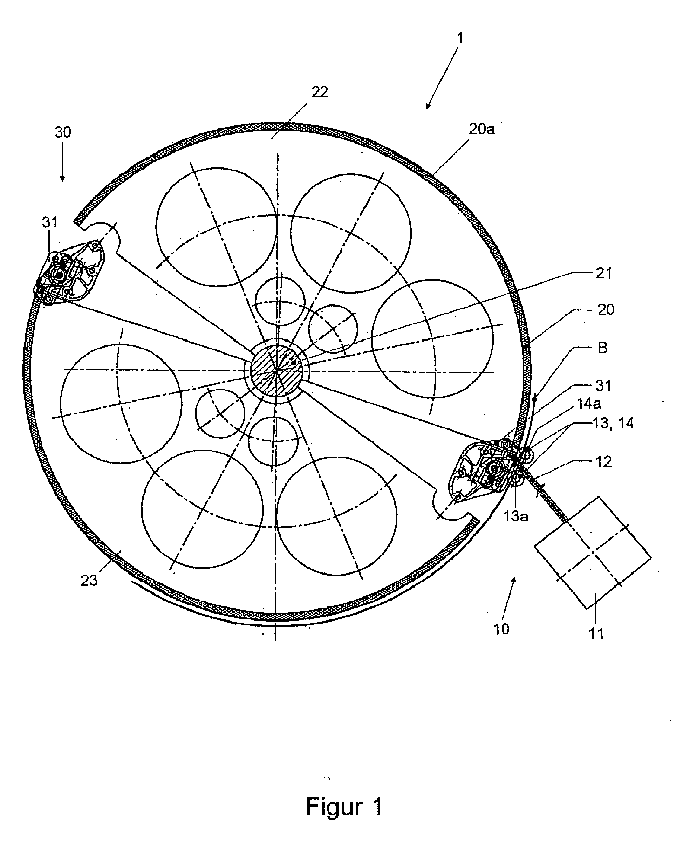

Wie Figur 1 zeigt, weist eine Schneideinrichtung 1 für eine Bogendruckmaschine (nicht dargestellt) gemäß der ersten Ausführungsform der Erfindung Schneidmittel 10 zum Schneiden von Druckbogen (nicht gezeigt) und eine Andruckscheibe 20 auf.

Die Schneideinrichtung 1 ist in einer Druckbogenlaufrichtung in der Bogendruckmaschine nach einem letzten Druckwerk oder nach einem letzten Lackwerk angeordnet.

Die Schneidmittel 10 gemäß der ersten Ausführungsform weisen eine Lasereinheit 11 und zwei Gegenrollen 13, 14 auf.

Die Andruckscheibe 20 ist von zwei kreissektorförmigen Segmenten 22, 23 gebildet, die gemeinsam den Umfang der Andruckscheibe 20 definieren und die an einer drehangetriebenen Achse bzw. Trommelwelle 21 befestigt sind. Die Andruckscheibe 20 liegt der Lasereinheit 11 so gegenüber, dass die zu schneidenden Druckbogen entsprechend einer Druckbogenbahn B von Greifersystemen 31 eines Kettenförderers 30 eines Auslegers der Bogendruckmaschine zwischen der Lasereinheit 11 und einer rotierenden Umfangsfläche 20a der Andruckscheibe 20 hindurchzuführen sind.

Die Lasereinheit 11 ist dabei so angeordnet, dass ein von der Lasereinheit 11 emittierter Laserstrahl 12 auf die Umfangsfläche 20a der Andruckscheibe 20 gerichtet ist.

Auf der Umfangsfläche 20a der Andruckscheibe 20 ist in einem bei einem Umlaufen der Andruckscheibe 20 gebildeten, ringförmigen Wirkbereich des Laserstrahls 12 in eine umlaufende Vertiefung (nicht gezeigt) in der Umfangsfläche 20a ein widerstandsfähiges, verschleißfestes Material eingefügt (z.B. eingeklebt), welches beim Schneiden eines an die Umfangsfläche 20a angelegten Druckbogens den Eintrag von durch den Laserstrahl 12 erzeugter Wärme in die Andruckscheibe 20 verhindert oder die Wärme ableitet.

Das Material kann die Form einer Kohlefasermatte haben, die sehr widerstandsfähig, verschleißfest und wärmeresistent ist. Geeignet sind auch gut wärme leitende Materialien wie Kupfer, mittels dessen die überschüssige Energie schnell abgeleitet werden kann. Weiterhin kann die Oberfläche des Materials so gestaltet sein, dass der durchtretende Laserstrahl stark gestreut wird und damit der Wärmeeintrag verhindert wird.

Ferner ist auf der Umfangsfläche 20a der Andruckscheibe 20 beidseitig des in dem ringförmigen Wirkbereich vorgesehenen, widerstandsfähigen, verschleißfesten Materials ringförmig jeweils ein elastisches Material in Form von z.B. Gummi vorgesehen.

Die beiden Gegenrollen 13, 14 sind mit vorbestimmtem Zwischenraum zwischen einander entlang des Umfangs der Andruckscheibe 20 angeordnet und jeweils drehbar an einer jeweils parallel zur Achse 21 der Andruckscheibe 20 verlaufenden Achse 13a bzw. 14a gelagert.

Die jeweiligen Achsen 13a, 14a der beiden Gegenrollen 13, 14 sind gemeinsam so verlagerbar, dass die Gegenrollen 13, 14 zum Anlegen der tangential an den Gegenrollen 13, 14 vorbeizuführenden Druckbogen an die Umfangsfläche 20a der Andruckscheibe 20 an die Umfangsfläche 20a anstellbar und, wenn kein Längsschneiden der Druckbogen gewünscht ist, von der Umfangsfläche 20a der Andruckscheibe 20 abstellbar sind.

Die Gegenrollen 13, 14 weisen in Richtung ihrer jeweiligen Achse 13a, 14a gesehen eine vorbestimmte Breite auf und sind entlang ihrer Breite sanduhrförmig profiliert.

Die zuvor beschriebenen Anordnungsmerkmale gelten in gleicher Weise für die weiter oben genannte Variante der Gleitschuhe als Leiteinrichtung für den zu schneidenden Bogen an der Andruckscheibe.

Die Lasereinheit 11 ist so angeordnet, dass von dieser emittierte Laserstrahlen 12 sich durch den zwischen den Gegenrollen 13, 14 vorhandenen Zwischenraum hindurch erstrecken und auf den mit dem widerstandsfähigen, verschleißfesten Material versehenen, ringförmigen Bereich der Umfangsfläche 20a der Andruckscheibe 20 treffen.

Die Lasereinheit 11, eine nicht dargestellte Verschwenkeinheit für die Gegenrollen 13, 14 und ein nicht dargestellter Antrieb für die Andruckscheibe 20 sind mit einer Steuervorrichtung der Bogendruckmaschine gekoppelt, so dass sie entsprechend dem gewünschten Steuerregime betreibbar sind. Damit sind die Schneidmittel 10 zum Schneiden der Druckbogen selektiv mit der Umfangsfläche 20a der Andruckscheibe 20 in Zusammenwirkung bringbar, wenn ein Längsschneiden der Druckbogen gewünscht ist. Wenn kein Längsschneiden der Druckbogen gewünscht ist, bleibt die Lasereinheit 11 außer Betrieb und sind die Gegenrollen 13, 14 von der Andruckscheibe 20 weggeschwenkt. Der Antrieb der Andruckscheibe 20 läuft entsprechend der Bewegung der Greifersysteme 31 des Kettenförderers 30 des Auslegers mit.

Benachbart zu der Andruckscheibe 20 und den beiden Gegenrollen 13, 14 ist eine Absaugvorrichtung (nicht dargestellt) zum Absaugen von beim Laserstrahlschneiden entstehenden Partikeln und Gasen bzw. Schmauch so angeordnet, dass sich deren Absaugwirkung auf den Zwischenraum zwischen den Gegenrollen 13, 14 konzentriert.

Nun wird beispielhaft der Betrieb der Schneideinrichtung 1 gemäß der ersten Ausführungsform beschrieben.

Im Schöndruck-Betrieb wird ein jeweiliger Druckbogen mit einem der Greifersysteme 31 des üblichen Kettenförderers 30 vom letzten Druckwerk/Lackwerk in der bekannten Weise abgenommen und entlang der Bogenbahn B in Richtung eines Auslagestapels (nicht gezeigt) transportiert. Der Druckbogen wird dabei von der Bogenbahn angesaugt. Auf dem Weg zum Auslagestapel überstreicht der Druckbogen die angestellten Gegenrollen 13, 14 und wird dadurch im Bereich der Schnittlinie an die Andruckscheibe 20 gedrückt und durch den Laserstrahl 12 getrennt. Durch den Laserschnitt entstehendes Substrat wird an der Schnittstelle von der Absaugvorrichtung abgesaugt und durch einen Luftfilter (nicht gezeigt) geleitet.

Im Schöndruck-und-Widerdruck-Betrieb wird ein jeweiliger Druckbogen mit einem der Greifersysteme 31 des üblichen Kettenförderers 30 vom letzten Druckwerk/Lackwerk in der bekannten Weise abgenommen und entlang der Bogenbahn B in Richtung eines Auslagestapels transportiert. Der Druckbogen wird dabei berührungslos über der Bogenbahn (Blas- Sogbahn) geführt. Auf dem Weg zum Auslagestapel überstreicht der Druckbogen die angestellten Gegenrollen 13, 14 und wird dadurch im Bereich der Schnittlinie an die Andruckscheibe 20 gedrückt und durch den Laserstrahl 12 getrennt. Durch den Laserschnitt entstehendes Substrat wird an der Schnittstelle von der Absaugvorrichtung abgesaugt und durch einen Luftfilter (nicht gezeigt) geleitet.

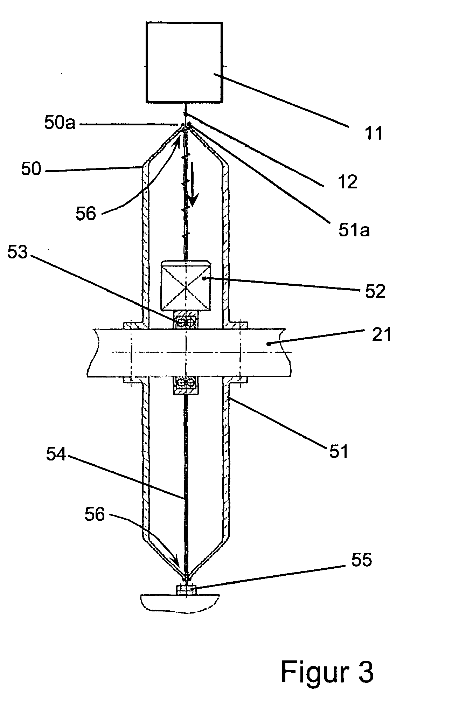

Die optionale Anordnung einer Strahlfangeinrichtung 52 ist in Fig. 3 dargestellt. Hier wird eine Möglichkeit dargestellt, die je nach Raumbedarf variierbar ist.

In Fig. 3 ist auf der Welle 21 ein Paar von Scheibensegmenten 50, 51 befestigt. Diese bilden gemeinsam eine Andruckscheibe. An der Außenseite der beiden Scheibensegmente 50 und 51 ist jeweils eine Umfangsfläche 50a, 51 a vorgesehen, die zur Führung des Druckbogens mit Hilfe von Gegenrollen oder Gleitschuhen dient (hier nicht gezeigt). Zwischen den Umfangsflächen. Im vorliegenden Fall ist zwischen den Umfangsflächen 50a, 51 a ein ringförmiger Durchtrittsspalt 56 gebildet, der in der Flucht des Laserstrahls 12 liegt. Die Lasereinheit 11 ist so ausgerichtet, dass der Laserstrahl 12 nach Durchschneiden eines auf den Umfangsflächen 50a, 51a aufliegenden Bogens den zwischen den Umfangsflächen liegenden Durchlassspalt 56 durchtritt. In Richtung des Strahlverlaufes des Laserstrahls 12 dahinterliegend ist die Strahlenfangeinrichtung 52 im Weg des Laserstrahls 12 angeordnet, um diesen aufzufangen und zu absorbieren bzw. dessen Restenergie zu vernichten.

Die Ausrichtung der Strahlenfangeinrichtung 52 erfolgt dadurch, dass diese mittels einer Lagerung 53 auf der Welle 21 drehbar gehaltert ist. Weiterhin wird die Strahlenfangeinrichtung 52 mittels einer Halterung 54 an einem Gestellpunkt 55 fixiert. Die Halterung 54 durchgreift hierbei den Durchlassspalt 56 zwischen den Segmentscheiben 50, 51. Mittels der Halterung 54 kann daher auch eine einstellbare Ausrichtung der Strahlenfangeinrichtung 52 in Richtung auf die Lasereinheit 11 bzw. in Richtung des Verlaufes des Laserstrahls 12 erfolgen.

Die Strahlfangeinrichtung 52 weist vorzugsweise ein gut Wärme leitendes Material im Bereich des Auftreffpunktes des Laserstrahls 12 auf. Die dort anfallende Wärmeenergie kann dann mittels einer Kühleinrichtung, z.B. einer Wasserkühlung abgeführt werden. Gleichfalls kann die Strahlfangeinrichtung 52 mit einer Absaugeinrichtung verbunden werden. Diese dient zum Abfördern von beim Betrieb des Lasers und beim Schneiden des Bedruckstoffes anfallenden Gasen. Die Anordnung der beiden Scheibensegmente 50, 51 mit dem zwischen deren Umfangsflächen 50a, 51 a gebildeten Durchlassspalt 56 bietet hierfür beste Voraussetzungen.

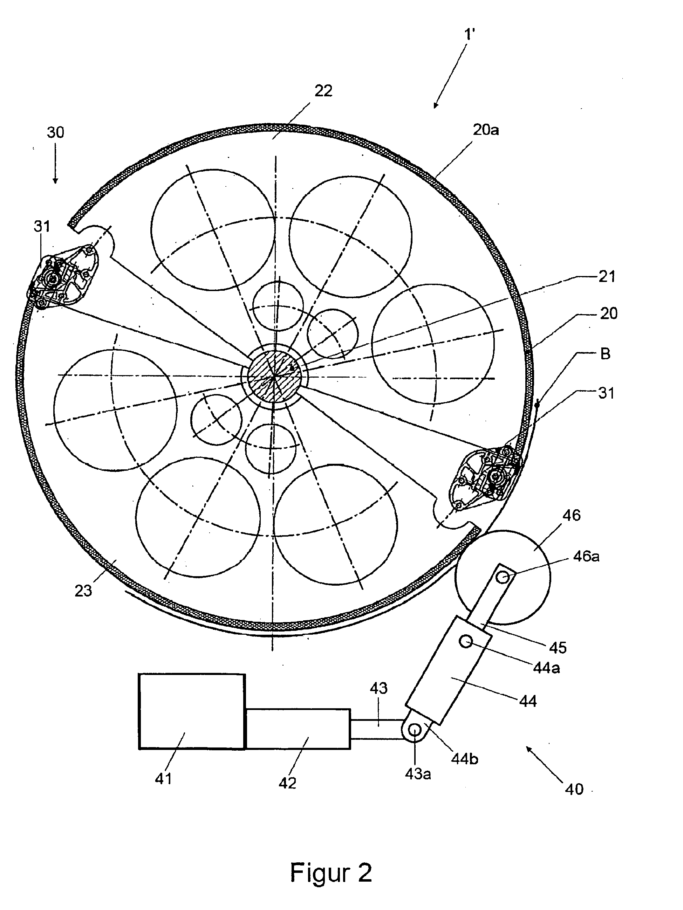

Nun wird unter Bezugnahme auf Fig.2 eine zweite Ausführungsform der Erfindung beschrieben. Die Schneideinrichtung 1' gemäß der zweiten Ausführungsform ist bis auf die hier vorgesehenen, anderen Schneidmittel 40 im Wesentlichen identisch mit der Schneideinrichtung 1 gemäß der ersten Ausführungsform. Daher werden im Folgenden vornehmlich die Unterschiede beschrieben.

Die Schneidmittel 40 gemäß der zweiten Ausführungsform weisen eine an einem Maschinengestell (nicht dargestellt) der Bogendruckmaschine befestigte Traverse 41, einen an der Traverse 41 befestigten Pneumatikzylinder 42 mit einer Kolbenstange 43 und einen Schneidkopf 44 mit einem sich davon erstreckenden Haltearm 45 und einem an dem Haltearm 45 gelagerten Schneidrad 46 auf. Das Schneidrad ist über eine parallel zur Achse 21 der Andruckscheibe 20 verlaufende Achse 46a drehbar an dem Haltearm 45 gelagert.

Der Schneidkopf 44 ist über eine parallel zur Achse 21 der Andruckscheibe 20 verlaufende, an dem Maschinengestell abgestützte Achse 44a verschwenkbar gelagert. An einem dem Haltearm 45 gegenüberliegenden Ende des Schneidkopfs 44 ist ein Ansatz 44b angeformt, in den ein Bolzen 43a eingesetzt ist. Der Bolzen 43a erstreckt sich ferner durch ein am freien Ende der Kolbenstange 43 ausgebildetes Auge hindurch, wodurch die Kolbenstange 43 und der Schneidkopf 44 schwenkbar miteinander gekuppelt sind.

Der Pneumatikzylinder 42 ist über nicht dargestellte Luftleitungen und ein ebenfalls nicht dargestelltes Steuerventil an eine Druckluftversorgung angeschlossen. Das Steuerventil ist mit der in Bezug auf die erste Ausführungsform schon erwähnten Steuervorrichtung gekoppelt, so dass der Pneumatikzylinder 42 entsprechend dem jeweils gewünschten Steuerregime ansteuerbar bzw. betreibbar ist.

Wenn die Kolbenstange 43 des Pneumatikzylinders 42 ausgefahren wird, wird der Schneidkopf 44 um die Achse 44a verschwenkt, so dass das Schneidrad 46 zum Schneiden von Druckbogen an die Umfangsfläche 20a der Andruckscheibe 20 angestellt wird.

Wenn die Kolbenstange 43 des Pneumatikzylinders 42 eingefahren wird, wird der Schneidkopf 44 um die Achse 44a verschwenkt, so dass das Schneidrad 46 zum Schneidfreistellen von der Umfangsfläche 20a der Andruckscheibe 20 abgestellt wird.

Gemäß der zweiten Ausführungsform der Erfindung ist die Andruckscheibe 20 an ihrer Umfangsfläche 20a in einem bei einem Umlaufen der Andruckscheibe 20 gebildeten, ringförmigen Wirkbereich des Schneidrades 46 mit einem Polyamidmaterial versehen. Dieser Einsatz kann austauschbar sein. Dadurch wird die scharfe Schneidkante des Schneidrades 46 vor Verschleiß geschützt.

Nun wird beispielhaft der Betrieb der Schneideinrichtung 1' gemäß der zweiten Ausführungsform beschrieben.

Im Schöndruck-Betrieb wird ein jeweiliger Druckbogen mit einem der Greifersysteme 31 des üblichen Kettenförderers 30 vom letzten Druckwerk/Lackwerk in der bekannten Weise abgenommen und entlang der Bogenbahn B in Richtung eines Auslagestapels (nicht gezeigt) transportiert. Der Druckbogen wird dabei von der Bogenbahn angesaugt. Kurz bevor die Vorderkante des Druckbogens eine Kontaktposition des Schneidrades 46 mit der Umfangsfläche 20a der Andruckscheibe erreicht hat wird das Schneidrad 46 an die Umfangsfläche 20a angestellt, so dass der Druckbogen längsgeschnitten wird.

Zur Verbesserung der Bogenanlage auf der Umfangsfläche 20a im Bereich der Schnittlinie können gemäß einer Ausgestaltung der zweiten Ausführungsform Gegenrollen 13, 14 (in Fig.2 nicht dargestellt) wie bei der ersten Ausführungsform vorgesehen sein. Durch den Schnitt entstehende Partikel können an der Schnittstelle von der Absaugvorrichtung abgesaugt und durch einen Luftfilter (nicht gezeigt) geleitet werden. Die Absaugvorrichtung kann hier aber auch weggelassen werden, da die Partikelentwicklung bei diesem Schneidvorgang relativ gering ist. Nach erfolgtem Längsschnitt des Druckbogens wird das Schneidrad 46 wieder von der Umfangsfläche 20a der Andruckscheibe 20 abgestellt.

Im Schöndruck-und-Widerdruck-Betrieb wird ein jeweiliger Druckbogen mit einem der Greifersysteme 31 des üblichen Kettenförderers 30 vom letzten Druckwerk/Lackwerk in der bekannten Weise abgenommen und entlang der Bogenbahn B in Richtung eines Auslagestapels (nicht gezeigt) transportiert. Der Druckbogen wird dabei berührungslos über der Bogenbahn (Blas- Sogbahn) geführt. Kurz bevor die Vorderkante des Druckbogens eine Kontaktposition des Schneidrades 46 mit der Umfangsfläche 20a der Andruckscheibe erreicht hat wird das Schneidrad 46 an die Umfangsfläche 20a angestellt, so dass der Druckbogen längsgeschnitten wird. Durch den Schnitt entstehende Partikel können, wenn vorgesehen, an der Schnittstelle von der Absaugvorrichtung abgesaugt und durch einen Luftfilter (nicht gezeigt) geleitet werden. Nach erfolgtem Längsschnitt des Druckbogens wird das Schneidrad 46 wieder von der Umfangsfläche 20a der Andruckscheibe 20 abgestellt.

### Bezugszeichenliste

- 1: Schneideinrichtung
- 1': Schneideinrichtung
- 10: Schneidmittel
- 11: Lasereinheit
- 12: Laserstrahl
- 13: Gegenrolle
- 13a: Achse
- 14: Gegenrolle
- 14a: Achse
- 20: Andruckscheibe
- 20a: Umfangsfläche
- 21: Achse (Trommelwelle)
- 22: Segment
- 23: Segment
- 30: Kettenförderer
- 31: Greifersystem
- 40: Schneidmittel
- 41: Traverse
- 42: Pneumatikzylinder
- 43: Kolbenstange
- 43a: Bolzen
- 44: Schneidkopf
- 44a: Achse
- 44b: Ansatz
- 45: Arm
- 46: Schneidrad
- 46a: Achse

- 50: Scheibensegment
- 50a: Umfangsfläche
- 51: Scheibensegment
- 52: Strahlfangeinrichtung
- 53: Lagerung
- 54: Halterung
- 55: Gestellpunkt

- B: Druckbogenbahn

## Patentansprüche

1. Schneideinrichtung (1, 1') für eine Bogendruckmaschine, aufweisend:
A. Schneidmittel (10, 40) zum Schneiden von Druckbogen, und
B. eine Andruckscheibe (20), die drehbar an einer Achse (21) gelagert ist und die den Schneidmitteln (10, 40) gegenüberliegt, so dass die zu schneidenden Druckbogen zwischen den Schneidmitteln (10, 40) und einer rotierenden Umfangsfläche (20a) der Andruckscheibe (20) hindurchzuführen sind, wobei die Schneidmittel (10, 40) zum Schneiden der Druckbogen selektiv mit der Umfangsfläche (20a) der Andruckscheibe (20) in Zusammenwirkung bringbar sind.

2. Schneideinrichtung (1, 1') gemäß Anspruch 1, wobei die Schneideinrichtung (1, 1') in einer Druckbogenlaufrichtung in der Bogendruckmaschine nach einem letzten Druckwerk oder nach einem letzten Lackwerk angeordnet ist.

3. Schneideinrichtung (1) gemäß Anspruch 1 oder 2, wobei die Schneidmittel (10) eine Lasereinheit (11), die so angeordnet ist, dass ein von der Lasereinheit (11) emittierter Laserstrahl (12) auf die Umfangsfläche (20a) der Andruckscheibe (20) gerichtet ist, und wenigstens eine Gegenrolle (13, 14) aufweisen, die drehbar an einer parallel zur Achse (21) der Andruckscheibe (20) verlaufenden Achse (13a, 14a) gelagert ist, zum Anlegen der tangential an der Gegenrolle (13, 14) vorbeizuführenden Druckbogen an die Umfangsfläche (20a) der Andruckscheibe (20).

4. Schneideinrichtung (1) gemäß Anspruch 3, wobei auf der Umfangsfläche (20a) der Andruckscheibe (20) in einem bei einem Umlaufen der Andruckscheibe (20) gebildeten, ringförmigen Wirkbereich des Laserstrahls (12) ein widerstandsfähiges, verschleißfestes Material vorgesehen ist, welches beim Schneiden eines an die Umfangsfläche (20a) angelegten Druckbogens den Eintrag von durch den Laserstrahl (12) erzeugter Wärme in die Andruckscheibe (20) verhindert.

5. Schneideinrichtung (1) gemäß Anspruch 4, wobei das widerstandsfähige, verschleißfeste Material in einer Vertiefung in der Umfangsfläche (20a) der Andruckscheibe (20) angeordnet ist.

6. Schneideinrichtung (1) gemäß Anspruch 4 oder 5, wobei auf der Umfangsfläche (20a) der Andruckscheibe (20) beidseitig des in dem ringförmigen Wirkbereich vorgesehenen, widerstandsfähigen, verschleißfesten Materials ringförmig jeweils ein elastisches Material vorgesehen ist.

7. Schneideinrichtung (1) gemäß einem der Ansprüche 3 bis 6, wobei benachbart zu der Andruckscheibe (20) und der wenigstens einen Gegenrolle (13, 14) eine Absaugvorrichtung angeordnet ist zum Absaugen von beim Laserstrahlschneiden entstehenden Partikeln und Gasen.

8. Schneideinrichtung (1) gemäß Anspruch 7, wobei die wenigstens eine Gegenrolle (13, 14) in Richtung ihrer Achse (13a, 14a) gesehen eine vorbestimmte Breite aufweist, und wobei die Gegenrolle (13, 14) entlang ihrer Breite profiliert ist.

9. Schneideinrichtung (1) gemäß Anspruch 8, wobei die wenigstens eine Gegenrolle (13, 14) entlang ihrer Breite sanduhrförmig profiliert ist.

10. Schneideinrichtung (1) gemäß Anspruch 9, wobei zwei Gegenrollen (13 und 14) vorgesehen sind, die mit vorbestimmtem Zwischenraum zwischen einander entlang des Umfangs der Andruckscheibe (20) angeordnet sind, und wobei die Lasereinheit (11) so angeordnet ist, dass von dieser emittierte Laserstrahlen (12) sich durch den Zwischenraum hindurch erstrecken.

11. Schneideinrichtung (1) gemäß einem der Ansprüche 3 bis 10, wobei jede Gegenrolle (13, 14) zur Aktivierung an die Umfangsfläche (20a) der Andruckscheibe (20) anstellbar und zur Deaktivierung von der Umfangsfläche (20a) der Andruckscheibe (20) abstellbar ist.

12. Schneideinrichtung (1) gemäß Anspruch 10 oder 11, wobei die Absaugvorrichtung so angeordnet ist, dass sich deren Absaugwirkung auf den Zwischenraum der Gegenrollen (13 und 14) konzentriert.

13. Schneideinrichtung (1') gemäß Anspruch 1 oder 2, wobei die Schneidmittel (40) ein Schneidrad (46) aufweisen, das drehbar an einer parallel zur Achse (21) der Andruckscheibe (20) verlaufenden Achse (46a) gelagert ist und das zum Schneiden an die Umfangsfläche (20a) der Andruckscheibe (20) anstellbar und zum Schneidfreistellen von der Umfangsfläche (20a) der Andruckscheibe (20) abstellbar ist.

14. Schneideinrichtung gemäß Anspruch 1 oder 2, wobei die Schneidmittel ein drehfestes Schneidmesser aufweisen, das zum Schneiden an die Umfangsfläche (20a) der Andruckscheibe (20) anstellbar und zum Schneidfreistellen von der Umfangsfläche (20a) der Andruckscheibe (20) abstellbar ist.

15. Schneideinrichtung 1' gemäß Anspruch 13 oder 14, wobei die Andruckscheibe (20) an ihrer Umfangsfläche (20a) in einem bei einem Umlaufen der Andruckscheibe (20) gebildeten, ringförmigen Wirkbereich der Schneidmittel (40) mit einem elastischen, widerstandsfähigen Material, wie einem Polyamidmaterial, versehen ist.

16. Schneideinrichtung 1' gemäß Anspruch 15, wobei die Andruckscheibe (20) an ihrer Umfangsfläche (20a) mit einem austauschbaren, elastischen, widerstandsfähigen Material versehen ist.

17. Schneideinrichtung (1, 1') gemäß einem der Ansprüche 1 bis 16, wobei die Andruckscheibe (20) mehrere kreissektorförmige Segmente (22, 23) aufweist, die gemeinsam den Umfang der Andruckscheibe (20) definieren.

18. Schneideinrichtung (1, 1') gemäß einem der Ansprüche 1 bis 17, wobei einer Andruckscheibe (50, 51) eine Strahlfangeinrichtung (52) zugeordnet ist, die den Einrichtungen zur Bogenförderung im Bereich der Führung des Laserstrahls (12) zugeordnet und der Lasereinheit (11) in Bezug auf den Bogenförderweg gegenüberliegend angeordnet ist.

19. Schneideinrichtung (1, 1') gemäß einem der Ansprüche 18, wobei eine Andruckscheibe durch zwei kreisförmige Scheibensegmente (50, 51) gebildet ist, die parallel zueinander auf der Achse (21) angeordnet sind und im Bereich einer Umfangsfläche (50a) einen ringförmigen Durchlassspalt bilden, wobei der Laserstrahl (12) auf den Durchlassspalt gerichtet ist.

20. Schneideinrichtung (1, 1') gemäß Anspruch 18 und 19, wobei innerhalb der durch die kreisförmigen Scheibensegmente (50, 51) gebildeten Andruckscheibe ein Hohlraum gebildet ist und dass in dem Hohlraum die Strahlfangeinrichtung (52) in Ausrichtung zu dem den Durchlassspalt durchtretenden Laserstrahl (12) angeordnet ist.

21. Schneideinrichtung (1, 1') gemäß Anspruch 20, wobei die Strahlfangeinrichtung (52) auf der Welle (21) drehbar gelagert und in ihrer Ausrichtung zum Durchlassspalt und zum einfallenden Laserstrahl (12) ausrichtbar angeordnet ist.

22. Schneideinrichtung (1,1') gemäß Anspruch 18 bis 21, wobei die Strahlfangeinrichtung (52) mittels eines Kühlmediums durchströmbar ausgebildet ist.
